# EUROPÄISCHE PATENTSCHRIFT

(11) **EP 3 301 256 B1**
(45) Veröffentlichungstag und Bekanntmachung des Hinweises auf die Patenterteilung: **08.04.2020**
(21) Anmeldenummer: 17001584.6
(22) Anmeldetag: 25.09.2017
(51) Int. Cl.: F01D 5/02, F01D 11/00

(54) **ROTORSTUFE FÜR EINE STRÖMUNGSMASCHINE, ROTORTROMMEL UND ROTOR**
ROTOR STAGE FOR A FLUID FLOW MACHINE, ROTOR DRUM AND ROTOR
ÉTAGE DE ROTOR POUR UNE TURBOMACHINE, TAMBOUR DU ROTOR ET ROTOR

(30) Priorität: 23.09.2016 DE 102016218285
(43) Veröffentlichungstag der Anmeldung: 04.04.2018
(73) Patentinhaber: MTU Aero Engines AG, 80995 München (DE)
(72) Erfinder: BINSTEINER, Thomas, 81245 München (DE); ALBERS, Lothar, 80638 München (DE); GEPPERT, Johann, 82299 Türkenfeld (DE)

(56) Entgegenhaltungen:
- EP-A1- 2 957 792
- EP-A2- 2 019 185
- US-A- 4 817 455
- US-A1- 2014 260 323
- US-A1- 2016 069 267
- US-B1- 8 720 259

## Beschreibung

Die vorliegende Erfindung betrifft eine Rotorstufe für eine Strömungsmaschine gemäß dem Oberbegriff des Anspruchs 1. Des Weiteren betrifft die vorliegende Erfindung eine Rotortrommel gemäß Anspruch 7 und einen Rotor gemäß Anspruch 10.

Rotoren für Strömungsmaschinen müssen vielfältige Anforderungen und Randbedingungen erfüllen. Beispielsweise sollten einzelne Rotorstufen ausgewuchtet werden können, um im Betrieb, insbesondere bei hohen Drehzahlen, verschleißarm und wartungsarm betrieben werden zu können. Unwuchten treten oft fertigungsbedingt in einzelnen Rotorstufen auf und können insbesondere beim Fräsen von Rotorschaufeln erzeugt werden. Die Rotorschaufeln können dabei in sogenannter BLISK Form oder in Einzelschaufelform hergestellt sein. Die Unwuchten werden regelmäßig vor einem ersten betriebsbedingten Einsatz durch geeignete Wuchtmaßnahmen, beispielsweise durch statisches oder dynamisches Wuchten, ausgeglichen.

Weiterhin sollten in Rotoren für Strömungsmaschinen, beispielweise bei Anwendungen für Flugtriebwerke, mögliche Ölansammlungen in Kavitäten im Rotorinnenraum, etwa von Lagerölansammlungen, aus dem Rotorinnenraum abfließen können, um mögliche Kontaminationen von Kabinenluftströmungen durch Verdichterabblasungen zu vermeiden. Beide Anforderungen zusammen zu erfüllen, erfordert geeignete konstruktive Lösungen.

Das US-Patent 4,817,455 schlägt vor, einen Schnappring mit im Wesentlichen einheitlichem Querschnitt in einer Nut einer Rotorscheibe eines beschaufelten Rotors anzuordnen, eine Missbalance des Rotors mit dem installierten Ring zu bestimmen, den Schnappring zum Schleifen zur Korrektur der Missbalance zu entfernen und an derselben Stelle zu reinstallieren, so dass Schleifen an oder nahe des Rotors vermieden wird.

Ein aus der EP 2 019 185 A2 bekanntes Verfahren zum Balancieren einer Anordnung von Rotorteilen eines Gasturbinentriebwerks umfasst das Messen von der Konzentrität und/oder Parallelität jeder Komponente und das globale Inbetrachziehen aller möglichen Komponentensteckpositionen, um für jede Komponente eine optimierte Steckposition zu erzeugen.

Eine aus der US 2016/0069267 A1 bekannte Befestigungsanordnung für ein Gasturbinentriebwerk umfasst einen ersten Körper mit einer ersten Oberfläche und einer hierdurch kommunizierenden Aussparung. Ein Schaft der Anordnung ist zwischen dem ersten und einem zweiten Körper angeordnet und weist erste und zweite Endbereiche auf. Der erste Endbereich ist in der Aussparung angeordnet und der zweite Endbereich ist mit dem zweiten Körper verbunden. Ein Füllmittel der Anordnung ist in der Aussparung angeordnet um den ersten Endbereich abzudecken.

Eine aus der US 8,720,25 9 bekannte Vorrichtung zum Testen einer Gasturbinentriebwerkskomponente umfasst einen zum Rotieren eingerichteten Schaft. Eine erste und eine zweite Nabe werden selektiv an dem Schaft befestigt, wobei zweite Enden der Naben jeweils ein Merkmal zum Unterstützen der Komponente zwischen dem ersten und zweiten Ende an einem Ort aufweisen, der von dem Schaft beabstandet ist, um an dem Schaft in der Nähe dieses Ortes eine Last einzuführen.

Eine Aufgabe der vorliegenden Erfindung ist es, eine Rotorstufe für eine Strömungsmaschine vorzuschlagen, die wenigstens mehrere Laufschaufeln, einen Rotorgrundkörper mit wenigstens zwei Rotorarmen und, insbesondere genau einer einzigen, Wuchtanordnung zum Wuchten der Rotorstufe umfasst. Ferner ist es Aufgabe der vorliegenden Erfindung, eine Rotortrommel und einen Rotor vorzuschlagen. Die erfindungsgemäße Aufgabe wird durch eine Rotorstufe mit den Merkmalen des Anspruchs 1 gelöst. Sie wird ferner durch eine Rotortrommel mit den Merkmalen des Anspruchs 7 und durch einen Rotor mit den Merkmalen des Anspruchs 10 gelöst.

Erfindungsgemäß wird somit eine Rotorstufe für eine Strömungsmaschine vorgeschlagen, wobei die Rotorstufe wenigstens mehrere Laufschaufeln, einen Rotorgrundkörper mit wenigstens zwei Rotorarmen und insbesondere genau eine Wuchtanordnung zum Wuchten der Rotorstufe umfasst. Der in Hauptdurchströmungsrichtung betrachtet stromab des Rotorgrundkörpers angeordnete Rotorarm weist die insbesondere genau eine Wuchtanordnung auf. Bei einer Wuchtanordnung wird die gesamte Rotorstufe mittels dieser Wuchtanordnung gewuchtet. Dies bedeutet, der in Hauptdurchströmungsrichtung betrachtet stromauf des Rotorgrundkörpers angeordnete Rotorarm weist bei der Ausführungsform von nur einer Wuchtanordnung der Rotorstufe keine weitere Wuchtanordnung auf.

Die Wuchtanordnung des stromab angeordneten Rotorarms ist zwischen einerseits dem, in Hauptdurchströmungsrichtung betrachtet, axialen Endbereich des stromab angeordneten Rotorarms und andererseits der Rotorscheibe des Rotorgrundkörpers angeordnet.

Die erfindungsgemäße Rotortrommel für eine Strömungsmaschine umfasst wenigstens eine erfindungsgemäße Rotorstufe und wenigstens eine weitere Rotorstufe. Die weitere Rotorstufe umfasst wenigstens ein Laufrad mit einem Rotorgrundkörper und mehreren Laufschaufeln. Die erfindungsgemäße Rotortrommel weist wenigstens eine Abschleuderöffnung auf. Die Abschleuderöffnung ist nach radial außen der Rotortrommel und weiterhin nahe des größten Radius einer Innenkontur der Rotortrommel angeordnet.

Der erfindungsgemäße Rotor für eine Strömungsmaschine umfasst wenigstens eine erfindungsgemäße Rotorstufe.

Vorteilhafte Weiterentwicklungen der vorliegenden Erfindung sind jeweils Gegenstand von Unteransprüchen und Ausführungsformen.

Erfindungsgemäße beispielhafte Ausführungsformen können eines oder mehrere der im Folgenden genannten Merkmale aufweisen.

Strömungsmaschinen können rein beispielhaft Gasturbinen sein. Eine Strömungsmaschine ist insbesondere eine axiale Gasturbine, beispielsweise eine Fluggasturbine.

Der Begriff "Rotor", wie er hierin verwendet wird, bezeichnet einen Rotationskörper in einer Strömungsmaschine, der sich im bestimmungsgemäßen Gebrauch um eine Rotationsachse oder Drehachse der Strömungsmaschine dreht. Der Rotor umfasst wenigstens eine Rotorstufe. Eine Rotorstufe kann als Laufrad bezeichnet werden oder ein Laufrad umfassen. Eine Rotorstufe umfasst wenigstens mehrere Laufschaufeln und einen Rotorgrundkörper. Eine Rotorstufe kann einen oder mehrere Rotorarme umfassen. Der Rotorgrundkörper kann als Scheibe, Rotorscheibe, Ring oder Rotorring bezeichnet werden oder diese umfassen. Ein Rotor kann eine oder mehrere Rotorstufen umfassen.

Ein Rotor kann in eine Strömungsmaschine, insbesondere in eine Gasturbine, eingebaut und montiert werden. Ein Flugtriebwerk kann eine Gasturbine sein oder eine Gasturbine umfassen. Ein Flugtriebwerk kann einen Verdichter mit mehreren Verdichterstufen und eine Turbine mit mehreren Turbinenstufen umfassen. Verdichterstufen und Turbinenstufen können jeweils Rotorstufen und Statorstufen aufweisen.

Die Laufschaufeln eines Rotors können als Schaufeln bezeichnet werden und weisen wenigstens jeweils ein Schaufelblatt, einen Schaufelfuß und eine Schaufelplattform auf. Die Schaufeln können separat, beispielsweise formschlüssig mittels einer wieder lösbaren sogenannten Schwalbenschwanzverbindung, oder integral mit dem Rotorgrundkörper verbunden sein. Separate Schaufeln können wieder lösbar und/oder formschlüssig und/oder stoffschlüssig mit dem Rotorgrundkörper verbunden sein. Eine integrale Verbindung ist insbesondere eine materialschlüssige Verbindung. Eine integrale Verbindung kann mittels eines generatives Herstellungsverfahrens gefertigt sein. Ein generatives Herstellungsverfahren kann als additives Herstellungsverfahren, Fertigungsverfahren oder als Rapid Prototyping bezeichnet werden. Ein generatives Herstellungsverfahren ist beispielsweise das selektive Lasersinterverfahren (SLS), das selektive Laserschmelzverfahren (SLM) oder das Kaltgasspritzverfahren. Ein Rotorgrundkörper mit integral mit dem Rotorgrundkörper verbundenen Schaufeln kann als integral beschaufelter Rotor bezeichnet werden. Ein integral beschaufelter Rotor kann ein sogenannter BLISK (Bladed Integrated Disk; integral beschaufelte Scheibe) oder ein BLING (Blade Integrated Ring; integral beschaufelter Ring) sein. Ein "Blisk" ist eine Rotor-Konstruktion, bei der die Scheibe und die Schaufel aus einem Stück hergestellt werden können.

Der Rotorgrundkörper kann nach radial innen gerichtete Rotorscheiben und/oder axial ausgerichtete Rotorarme umfassen. Die nach radial innen gerichteten Rotorscheiben können als Verlängerungen oder T-förmige Verlängerungen der Laufschaufeln bezeichnet werden.

Die Rotorarme können als Trommelkörper oder Abschnitte eines Trommelkörpers bezeichnet werden. Der Rotor ist zum direkten oder indirekten Verbinden mit einer Welle der Strömungsmaschine ausgestaltet oder vorbereitet. Eine indirekte Verbindung kann mittels einer Nabe und/oder mittels weiterer Rotoren ausgeführt sein. Bei einer direkten Verbindung kann der Rotor direkt an die Welle angeflanscht sein.

Der Begriff "Rotortrommel", wie er hierin verwendet wird, bezeichnet Abschnitte von wenigstens zwei axial miteinander verbundenen Rotorgrundkörpern. Insbesondere Rotorarme können eine Rotortrommel ausbilden. Eine Rotortrommel kann gleichfalls über mehr als zwei Rotorgrundkörper sowie optional über mehrere Rotorarme und Rotorscheiben ausgebildet sein. Beispielsweise können mehrere Rotorgrundkörper eines rein exemplarische achtstufigen Verdichters in einer Strömungsmaschine eine Rotortrommel ausbilden.

Die Begriffe "Rotorinnenraum und Rotoraußenraum", wie sie hierin verwendet werden, bezeichnen die Räume innerhalb und außerhalb der Rotortrommel von Rotoren. Der Rotorinnenraum wird somit nach radial außen im Wesentlichen durch einen oder mehrere Rotorarme begrenzt. In axialer Richtung wird der Rotorinnenraum im Wesentlichen durch Rotorscheiben begrenzt, wobei zwischen einer Welle, mit der die Rotortrommel direkt oder indirekt verbunden ist und den Rotorscheiben im Allgemeinen ein Spalt ausgebildet ist. Der Rotoraußenraum wird nach radial innen im Wesentlichen durch einen oder mehrere Rotorarme begrenzt. Der Rotoraußenraum umfasst im Wesentlichen den Hauptdurchströmungskanal der Strömungsmaschine. Zwischen einem Rotorarm und dem Hauptdurchströmungskanal können weiterhin beispielsweise Leitradinnenringe, mit oder ohne Einlaufdichtungen, angeordnet sein. Der Rotorinnenraum und/oder der Rotoraußenraum kann mehrere Rotorstufen umfassen.

Axial hintereinander angeordnete Rotorgrundkörper können mittels Rotorarmen und/oder Rotorscheiben miteinander verbunden sein. Die Verbindung ist insbesondere formschlüssig und/oder kraftschlüssig.

Innerhalb der Rotortrommel können ringförmige Wuchtbünde, insbesondere an der Innenseite der Rotorarme angeordnet sein. Die Wuchtbünde können kraftschlüssig mit den Rotorarmen verbunden sein. Weiterhin können innerhalb der Rotortrommel alternativ oder zusätzlich weitere Wuchtvorrichtungen, beispielsweise Flansche mit über dem Umfang befestigten Wuchtgewichten, angeordnet sein.

In einigen erfindungsgemäßen, beispielhaften Ausführungsformen kann die Rotortrommel am stromabseitigen Rotorarm der erfindungsgemäßen Rotorstufe einen zumindest abschnittsweise größeren Rotorinnendurchmesser aufweisen als der Rotorinnendurchmesser der Rotortrommel am stromaufseitigen Rotorarm der erfindungsgemäßen Rotorstufe. Bei einem größeren Rotorinnendurchmesser kann vorteilhaft ein leichteres oder kleineres Wuchtgewicht am Rotorarm gegenüber einem Wuchtgewicht an einem kleineren Rotorinnendurchmesser verwendet werden, um das gleicht Wuchtergebnis zu erzielen.

In bestimmten erfindungsgemäßen Ausführungsformen sind die Rotorgrundkörper, z. B. ein erster und ein zweiter Rotorgrundkörper, zur Aufnahme von Laufschaufeln zum Ausbilden einer ersten Rotorstufe mit dem ersten Rotorgrundkörper und einer zweiten Rotorstufe mit dem zweiten Rotorgrundkörper vorbereitet.

In gewissen erfindungsgemäßen Ausführungsformen sind die Rotorgrundkörper integral mit Laufschaufeln verbunden. Ein Laufrad, das einen Rotorgrundkörper mit mehreren auf dem Umfang angeordneten und integral verbundenen Laufschaufeln aufweist, kann als sogenannter "Blisk" bezeichnet werden.

In einigen erfindungsgemäßen Ausführungsformen sind die Rotorgrundkörper formschlüssig, insbesondere wieder lösbar, mit den Laufschaufeln verbunden. Eine formschlüssige und wieder lösbare Verbindung kann eine sogenannten Schwalbenschwanzverbindung sein.

In manchen erfindungsgemäßen Ausführungsformen weist der Rotorann wenigstens eine Dichtspitze zum Verringern von Leckageströmen zwischen dem Rotor und statischen Bauteilen der Strömungsmaschine, insbesondere dem Leitrad, auf. Das Leitrad kann als Statorstufe bezeichnet werden,

In gewissen erfindungsgemäßen Ausführungsformen ist der Rotorarm aus einem ersten Material hergestellt oder weist ein erstes Material auf. Der Wuchtring kann aus einem zweiten Material hergestellt sein oder ein zweites Material aufweisen. Das erste Material und das zweite Material sind dabei unterschiedlich. Dadurch kann beispielsweise ein Aufschrumpfprozess des Wuchtrings auf den Rotorarm und/ oder ein Materialabtrag des Wuchtrings zum Zweck des Auswuchten vorteilhaft verwendet werden.

In einigen erfindungsgemäßen Ausführungsformen ist das Material des Rotorarms und des Wuchtrings identisch.

In manchen erfindungsgemäßen Ausführungsformen weist der Wuchtring wenigstens einen vorgesehenen oder vorbereiteten Bereich zur Materialentnahme zum Auswuchten des Rotors auf dem Umfang des Wuchtrings auf.

In einigen erfindungsgemäßen Ausführungsformen weist die erste Rotorstufe einen Wuchtflansch mit wenigstens einem Wuchtgewicht auf. Insbesondere weist der Wuchtflansch über dem Umfang der Rotorstufe eine nicht durchgehende oder unterbrochene Kontur auf. Eine durchgehende Kontur wäre beispielsweise eine geschlossene, ringförmige Kontur, beispielsweise ein geschlossener Wuchtring. Aufgrund einer nicht durchgehenden Kontur des Wuchtflansches kann sich beispielsweise Lageröl oder ein anderes Fluid nicht in einer durch den Wuchtflansch erzeugten Kavität ansammeln, wenn der Rotor sich betriebsbedingt dreht und das Lageröl fliehkraftbedingt nach außen, als innerhalb der Rotortrommel an die radial innen liegende Rotortrommelwand, geschleudert wird. Trotzdem können auf dem Umfang verteilte Wuchtgewichte zum Unwuchtsausgleich der Rotorstufe an dem Wuchtflansch fixiert werden.

Der Rotorarm weist eine Öffnung zum Durchtritt von Fluiden aus dem Rotorinnenraum in den Rotoraußenraum auf. Durch die Öffnung kann Lageröl, insbesondere kondensierter Lagerölnebel von einer in unmittelbarer Nähe der Rotorstufe angeordneten Nabe, während der Rotation des erfindungsgemäßen Rotors in den Hauptdurchströmungskanal abgeschleudert werden. Die Öffnung kann als Abschleuderöffnung, Abschleuderbohrung oder als Ölabschleuderbohrung bezeichnet werden.

Die Wuchtanordnung ist in einem Bereich zwischen einer radialen Längsachse des Rotorgrundkörpers und der Hälfte der axialen Länge des stromabseitigen Rotorarms angeordnet. Diese Anordnung der Wuchtanordnung kann als scheibennahe oder rotorscheibennahe Anordnung bezeichnet werden. Die Gesamtlänge des stromabseitigen Rotorarms wird als axiale Ausdehnung des Rotorarms von der radialen Längsachse des Rotorgrundkörpers bis zum axialen Ende des Rotorarms definiert. Am axialen Ende oder Endbereich des Rotorarms kann die nächste, weiter stromab angeordnete Rotorstufe angeflanscht werden.

In manchen erfindungsgemäßen, beispielhaften Ausführungsformen ist die Wuchtanordnung in einem Bereich zwischen der radialen Längsachse des Rotorgrundkörpers und dem scheibennahen Drittel der Gesamtlänge des stromabseitigen Rotorarms angeordnet.

Der stromauf (in der Hauptdurchströmungsrichtung betrachtet) des Rotorgrundkörpers angeordnete Rotorarm weist eine Abschleuderöffnung auf. Bei genau einer Wuchtanordnung der Rotorstufe (diese Wuchtanordnung ist am Rotorarm stromab des Rotorgrundkörpers angeordnet) weist der Rotorarm stromauf des Rotorgrundkörpers, zumindest innerhalb der Rotortrommel stromauf des Rotorgrundkörpers, keine Wuchtanordnung auf.

In einigen erfindungsgemäßen beispielhaften Ausfiihrungsformen weist die erfindungsgemäße Rotorstufe eine Wuchtanordnung zum Auswuchten von Unwuchten in unmittelbarer Nähe zum Rotorstufenschwerpunkt auf. Die Rotorscheibe oder der Rotorring kann eine integral beschaufelte (BLISK, BLING) oder eine nicht integral beschaufelte Rotorscheibe oder Rotorring sein. Die Rotorstufe kann genau eine Wuchtanordnung in unmittelbarer Nähe zum Rotorstufenschwerpunkt zum Auswuchten der Rotorstufe aufweisen.

In manchen beispielhaften erfindungsgemäßen Ausführungsformen ist die Wuchtanordnung in einem Rotorinnenraum angeordnet. Die Wuchtanordnung kann innerhalb der Rotortrommel stromab der Rotorscheibe der erfindungsgemäßen Rotorstufe angeordnet sein.

In einigen erfindungsgemäßen beispielhaften Ausführungsformen ist die Wuchtanordnung integral mit dem Rotorarm verbunden. Ein Unwuchtsausgleich an einer integral mit dem Rotorarm verbundenen Wuchtanordnung kann beispielsweise mittels eines materialabtragenden Verfahrens (z. B. spanende Bearbeitung), eines stoffschlüssigen und/oder mittels eines formschlüssigen Materialauftrags erfolgen. Ein Materialauftrag kann mittels eines Annietens oder Anflanschens von Gewichten erfolgen.

Ein integral mit dem Rotorarm verbundener Wuchtring kann ein mittels einer kraftschlüssigen Presspassung mit dem Rotorarm verbundener Wuchtring sein. Insbesondere ist ein integral mit dem Rotorarm verbundener Wuchtring kein Wuchtring, der mittels einer Schraubverbindung und/oder einer formschlüssigen Verbindung ohne Presspassung mechanisch einfach lösbar wäre. Ein mittels einer Preßpassung integral mit dem Rotorarm verbundener Wuchtring kann vorteilhaft mit Hilfe eines materialabtragenden Verfahrens, z. B. Fräsen, Bohren oder Schleifen, ausgewuchtet werden, ohne dass der Wuchtring von dem Rotor teilweise oder vollständig demontiert werden muss.

In einigen erfindungsgemäßen beispielhaften Ausführungsformen ist die Wuchtanordnung ein Wuchtring oder weist einen solchen auf.

In einigen erfindungsgemäßen beispielhaften Ausführungsformen der erfindungsgemäßen Rotortrommel sind die Rotoranne der ersten Rotorstufe und der zweiten Rotorstufe formschlüssig miteinander verbunden. Die formschlüssige Verbindung kann eine Passung aufweisen, beispielsweise eine Übergangspassung oder eine Presspassung.

In einigen erfindungsgemäßen beispielhaften Ausführungsformen des erfindungsgemäßen Rotors ist eine erfindungsgemäße Rotorstufe als zweite Rotorstufe stromab einer ersten Rotorstufe innerhalb des Rotors angeordnet. Stromauf der ersten Rotorstufe ist eine Rotornabe angeordnet. Die Rotornabe verbindet die erste und zweite Rotorstufe mit einer Rotorwelle.

In einigen erfindungsgemäßen beispielhaften Ausführungsformen des erfindungsgemäßen Rotors weist die erste Rotorstufe keine Wuchtanordnung auf.

Die erfindungsgemäße Rotorstufe und/oder die erfindungsgemäße Rotortrommel und/oder der erfindungsgemäße Rotor kann ein Bauteil eines Verdichters einer Strömungsmaschine sein. Der Verdichter kann ein Hochdruckverdichter eines Flugtriebwerks sein.

Manche oder alle erfindungsgemäßen Ausführungsformen können einen, mehrere oder alle der oben und/oder im Folgenden genannten Vorteile aufweisen.

Mittels der erfindungsgemäßen Rotortrommel können Ölansammlungen, insbesondere Lagerölansammlungen, innerhalb der Rotortrommel vorteilhaft vermieden oder zumindest verringert werden.

Mittels der erfindungsgemäßen Rotorstufe kann ein Unwuchtsausgleich aufgrund einer Wuchtanordnung in der Nähe des Rotorstufenschwerpunkts vorteilhaft vereinfacht und ein besseres Wuchtergebnis erzielt werden gegenüber Wuchtanordnungen, die weiter entfernt vom Rotorstufenschwerpunkt angeordnet sind. Insbesondere bei Rotorstufen oder Bauteilen, die statisch, also nicht dynamisch, ausgewuchtet werden müssen oder sollen, ist eine Wuchtanordnung, beispielsweise ein Wuchtbund, die nahe der Unwucht angeordnet ist, vorteilhaft, weil bei einem Unwuchtsausgleich die Unwuchtsmomente/Biegungen innerhalb des Bauteils klein gehalten werden können. Durch eine derartige Wuchtentnahmestelle (Wuchtanordnung) nahe der Unwucht, also einem kurzen Hebelarm zwischen der Unwucht und der Wuchtanordnung können mögliche Rotorschwingungen vorteilhaft reduziert werden.

Mittels der erfindungsgemäßen Rotorstufe mit nur einer Wuchtanordnung können Kostenvorteile aufgrund nur einer Wuchtanordnung erzielt werden. Mittels einer erfindungsgemäßen Rotorstufe mit nur einem Wuchtbund und damit einer möglichen Materialentnahmestelle (anstatt zwei oder mehrerer Wuchtbunde) kann ein Unwuchtsausgleich vorteilhaft einfacher und wirtschaftlicher erfolgen gegenüber einer Rotorstufe mit mehreren Wuchtbunden.

Weiterhin kann eine Wuchtanordnung, die nicht an einem axialen Endbereich eines Rotorarms angeordnet ist, die Spannungsverteilung an dem axialen Endbereich des Rotorarms, beispielsweise an einem Presssitz zum Verbinden mit weiteren Rotorstufen, vorteilhaft reduzieren. Ein axialer Endbereich des Rotorarms weist in diesem Endbereich keine Wuchtanordnung und somit keine Materialentnahmemöglichkeit auf und somit zu einer gleichmäßigeren Spanungsverteilung am axialen Endbereich des Rotorarms gegenüber Anordnungen mit Materialentnahmemöglichkeiten.

Mittels des erfindungsgemäßen Rotors und/oder mittels der erfindungsgemäße Rotortrommel kann eine Reproduzierbarkeit des Wuchtergebnisses vorteilhaft erzielt werden, da kein Einfluss bei einer möglichen Wuchtentnahme auf eine Steifigkeit eines Presssitzes an einem axialen Endbereich des Rotorarms (zum Verbinden mit einer weiteren Rotorstufe) auftritt. Bei einer nicht erfindungsgemäßen Wuchtanordnung an einem axialen Endbereich eines Rotorarms kann die Steifigkeit einer Verbindung mit einem Presssitz beeinflusst werden. Dies kann eine Reproduzierbarkeit eines Wuchtergebnisses nicht sicherstellen.

Mittels des erfindungsgemäßen Rotors können Ölansammlungen, beispielsweise Lagerölansammlungen, im Rotorinnenraum, also innerhalb der Rotortrommel, vorteilhaft vermieden oder zumindest verringert werden. Insbesondere eine Wuchtanordnung am stromabseitigen Rotorarm der zweiten Rotorstufe kann eine Wuchtanordnung innerhalb der Rotortrommel zwischen der ersten und zweiten Rotorstufe vermieden werden. Mit einer Anordnung einer Ölabschleuderbohrung in oder an der Rotortrommel zwischen der ersten und zweiten Rotorstufe kann beispielsweise Lageröl aus dem Rotorinnenraum in den Rotoraußenraum abfließen. Das Auswuchten der zweiten Rotorstufe wird sozusagen aus der Rotortrommel zwischen der ersten und zweiten Rotorstufe in die Rotortrommel zwischen der zweiten und dritten Rotorstufe verlagert. Das Abfließen von möglichem Lageröl aus dem Rotorinnenraum kann mögliche Kontaminationen von Kabinenluft durch Lageröl, bei einer Anwendung des Rotors in einem Flugtriebwerk, zumindest verringert.

Die vorliegende Erfindung wird im Folgenden anhand der beigefügten Zeichnungen, in welcher identische Bezugszeichen gleiche oder ähnliche Bauteile bezeichnen, exemplarisch erläutert. In den jeweils stark schematisch vereinfachten Figuren gilt:
- Fig. 1: zeigt eine aus dem Stand der Technik bekannte Rotorstufe mit zwei Wuchtanordnungen an den Rotorarmen und eine Ölkavität; und
- Fig. 2: zeigt eine erfindungsgemäße Rotorstufe mit einer Wuchtanordnung zwischen dem Endbereich des stromab angeordneten Rotorarms und dem Rotorgrundkörper.

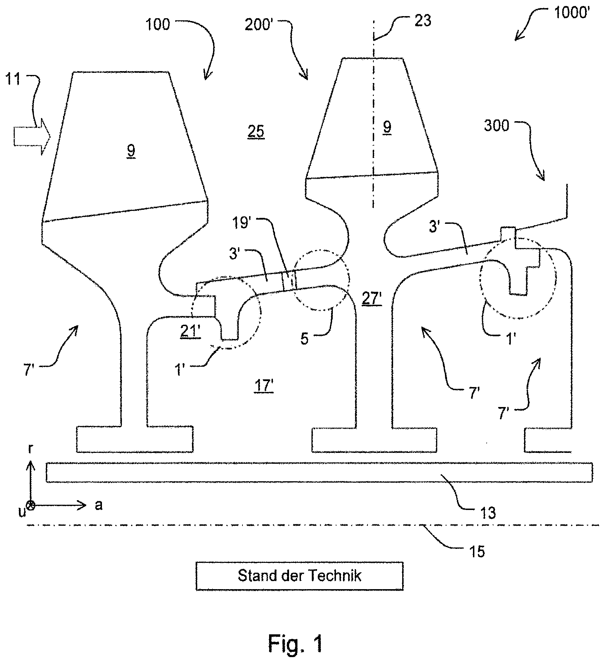

Fig. 1 zeigt eine aus dem Stand der Technik bekannte zweite Rotorstufe 200' mit zwei Wuchtanordnungen 1' an den Rotorarmen 3' sowie eine erste Ölkavität 5.

Die Wuchtanordnungen 1' sind als integral mit den Rotorarmen 3' verbundene Wuchtringe ausgeführt. Eine integrale Bauweise kann als einstückige Bauweise bezeichnet werden. Weiterhin sind die Rotorarme 3' integrale Abschnitte des Rotorgrundkörpers 7'. Die Rotorgrundkörper 7' sind mit den Laufschaufeln 9 verbunden, beispielsweise mittels einer formschlüssigen oder einer materialschlüssigen Verbindung. Über dem Umfang u sind mehrere Laufschaufeln nebeneinander angeordnet. Die Laufschaufeln 9 werden in der Hauptdurchströmungsrichtung 11 von einem Durchströmungsmedium umströmt. Der Rotorgrundkörper 7' und die über dem Umfang angeordneten Laufschaufeln bilden zusammen ein Laufrad der Strömungsmaschine.

Die Rotorgrundkörper 7' sind an einer in Fig. 1 nicht dargestellten Stelle mit einer Welle 13 verbunden. Die Verbindung kann beispielsweise stromauf der ersten Rotorstufe 100 und stromab der dritten Rotorstufe 300 mittels beispielsweise zwei Naben oder Konen ausgeführt sein. Alternativ kann der Rotorgrundkörper 7' mittels einer Verschraubung, insbesondere ohne einer Welle 13, mit einem axial angrenzenden Bauteil verbunden werden.

Das dargestellte Koordinatensystem gibt die Axialrichtung a an, die in der Hauptströmungsrichtung 11 und in Richtung der Rotationsachse 15 der Welle 13 ausgerichtet ist. Die Radialrichtung r verläuft in Richtung einer Längsachse 23 der Schaufeln 9 nach radial außen.

In bestimmten Betriebszuständen kann Lageröl oder Lagerölnebel (im Folgenden wird für beide Begriffe vereinfachend Lageröl genannt; der Begriff Lageröl kann Lagerölnebel, kondensierter Lagerölnebel oder andere Fluide bedeuten oder diese mit umfassen) aus einem stromauf der ersten Rotorstufe 100 angeordneten Lager austreten. Dieses Lageröl kann sich stromab ansammeln, insbesondere in einer vorderen Rotortrommel 17' zwischen der ersten Rotorstufe 100 und der zweiten Rotorstufe 200'. Je nach konstruktiver Ausgestaltung dieser vorderen Rotortrommel 17' kann das Lageröl durch eine Öffnung, die als Abschleuderbohrung 19' ausgeführt sein kann, in den Hauptströmungskanal 25 austreten und mit dem Arbeitsfluid in der Hauptdurchströmungsrichtung 11 abtransportiert werden. Jedoch können sich in der vorderen Rotortrommel 17' konstruktionsbedingt Kavitäten bilden, in denen sich im Betriebszustand der Strömungsmaschine, also bei einer Rotation der Rotorstufen 100, 200', 300, das Lageröl fliehkraftbedingt ansammeln kann. Eine derartige Kavität ist in Fig. 1 zwischen der Abschleuderbohrung 19' und der Rotorscheibe 27' des Rotorgrundkörpers 7' als erste Ölkavität 5 dargestellt. Eine zweite Ölkavität 21' kann sich bei einem als geschlossenem Ring ausgeführten Wuchtring der stromauf angeordneten Wuchtanordnung 1' der zweiten Rotorstufe 200' ausbilden. Derartige Ölkavitäten können sich nachteilig auswirken, insbesondere wenn die angesammelten Ölmengen groß werden (also die Kavitäten vollständig oder fast vollständig mit Lageröl gefüllt sind), und das Lageröl sich in nachfolgenden Betriebszuständen, z. B. bei einem Stillstand oder Abstellen des Rotors 1000' und/oder bei einem nachfolgenden Wiederanfahren angesammeltes Lageröl über sogenannte Verdichterabblasungen beispielsweise in Flugtriebwerken als Strömungsmaschinen die Kabinenluft kontaminieren kann.

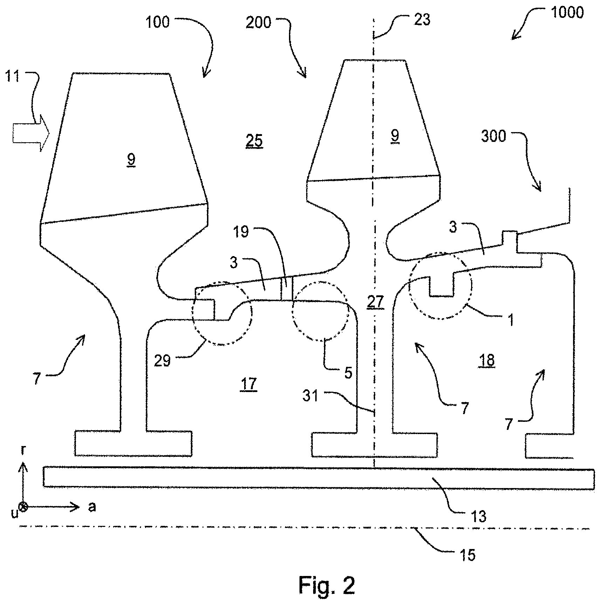

Fig. 2 zeigt eine erfindungsgemäße zweite Rotorstute 200 mit einer Wuchtanordnung 1 zwischen dem Endbereich des stromab angeordneten Rotorarms 3 und dem Rotorgrundkörper 7 oder der Rotorscheibe 27. Die zweite Rotorstufe 200 weist keine zweite oder weitere Wuchtanordnung (im Gegensatz zum in Fig. 1 gezeigten Stand der Technik) auf.

Weiterhin ist der Rotorgrundkörper 7 mit der Rotorscheibe 27 und dem stromauf angeordneten Rotorarm 3 konstruktiv derart ausgestaltet, dass sich keine Kavitäten für mögliche Ölablagerungen innerhalb der vorderen Rotortrommel 17 ausbilden können. Die Abschleuderbohrung 19 (die Abschleuderbohrung 19 kann als Ölabschleuderbohrung bezeichnet werden) ist nahe des radial äußersten Durchmessers der vorderen Rotortrommel 17 angeordnet, so dass mögliches Lageröl in der vorderen Rotortrommel 17 direkt und unmittelbar im Betriebszustand der Strömungsmaschine bei rotierendem Rotor 1000 in den Hauptdurchströmungskanal 25 abgeführt und mit der Hauptdurchströmung in der Hauptdurchströmungsrichtung 11 abtransportiert wird. Zum einen ist die radial innere Kontur des stromauf angeordneten Rotorarms 3 der erfindungsgemäßen zweiten Rotorstufe 200 zwischen der Abschleuderbohrung 19 und der Rotorscheibe 27 derart optimiert ausgestaltet, dass Lageröl zumindest weitgehend fliehkraftbedingt durch die Abschleuderbohrung 19 abfließen kann. Andererseits weist die formschlüssige Verbindung des stromaufseitigen Endbereichs 29 des Rotorarms 3 keinen, insbesondere nach radial innen gerichteten, Wuchtbund auf, der eine Kavität für Lageröl verursachen und ausbilden könnte. Derartige Kavitäten können in Rotortrommeln 200' nach dem Stand der Technik (Fig. 1, zweite Ölkavität 21') zu Ölansammlungen führen.

Die Wuchtanordnung 1 ist als integral mit dem stromabseitigen Rotorarm 3 verbundenen Wuchtring ausgeführt. Eine integrale Verbindung ist insbesondere eine einstückige Verbindung. Eine einstückige Verbindung kann im Schmiedeverfahren, insbesondere mittels Drehen und/oder Fräsen, oder im Gußverfahren hergestellt sein, alternativ mittels eines generativen Fertigungsverfahren, z. B. mittels eine Lasersinterprozesses, oder mittels materialschlüssigen (synonym zu stoffschlüssigen) Verfahren oder eines anderen Verfahrens. Der Rotorarm 3 und der Wuchtring der Wuchtanordnung 1 kann aus dem gleichen Material oder aus unterschiedlichen Materialen hergestellt sein.

Die dargestellten Endbereiche der erfindungsgemäßen zweiten Rotorstufe 200 der Rotoranne 3 sind formschlüssig mit der stromaufseitig angrenzenden Rotorstufe 100 als auch mit der stromabseitig angrenzenden Rotorstufe 300 verbunden. Alternativ können diese Verbindungen, einzeln oder mehrfach, mit anderen Verbindungsarten ausgeführt sein, beispielsweise mittels Flanschverbindungen, die geschraubt sein können, oder anderer Alternativen. Die rein exemplarisch dargestellte formschlüssige Verbindung kann insbesondere Passungen aufweisen.

Die Rotorgrundkörper 7 sind mit den Laufschaufeln 9 verbunden, beispielsweise mittels einer formschlüssigen oder einer materialschlüssigen Verbindung. Über dem Umfang u sind mehrere Laufschaufeln nebeneinander angeordnet. Die Laufschaufeln 9 werden in der Hauptdurchströmungsrichtung 11 von einem Durchströmungsmedium umströmt. Der Rotorgrundkörper 7 und die über dem Umfang angeordneten Laufschaufeln bilden zusammen ein Laufrad der Strömungsmaschine.

Das Laufrad mit den integral verbundenen Schaufeln 9 und mit dem Rotorgrundkörper 27 kann als sogenannter BLISK (Bladed Disk) oder ein BLING (Blade Ring) ausgeführt sein.

Die Ausführungsform der in Fig. 2 dargestellten erfindungsgemäßen Rotorstufe 200 ist insbesondere zum statischen Wuchten ausgestaltet. Zum statischen Wuchten der Rotorstufe 200 ist ein Wuchtbund in einer Wuchtanordnung 1 zum Auswuchten der Rotorstufe 200 ausreichend. Diese eine Wuchtanordnung 1 ist vorteilhaft an dem stromabseitigen Rotorarm 3 angeordnet, sodass an dem stromaufseitigen Rotorarm 3 keine Wuchtanordnung notwendig ist. Eine stromaufseitige Wuchtanordnung könnte, insbesondere bei einer radial inneren Anordnung am Rotorarm 3, also innerhalb der vorderen Rotortrommel 17, zu Ölansammlungen führen.

Weiterhin ist die Wuchtanordnung 1 in unmittelbarer Nähe zur Rotorscheibe 27 angeordnet. Eine Unwucht der Rotorstufe 200 kann insbesondere im Bereich der Rotorscheibe 27 auftreten. Die axiale Position der größten Unwucht liegt dabei oft in der Nähe des Schwerpunkts der Rotorstufe 200, die im Bereich der Längsachse (in Radialrichtung) des Rotorgrundkörpers 27 und/oder im Bereich der Längsachse der Schaufeln 23 liegt.

Aufgrund der in unmittelbarer Nähe angeordneten Wuchtanordnung 1 zur Rotorscheibe 27 können vorteilhaft hohe Unwuchtmomente und/oder Biegungen des Rotorarms 3 vermieden werden, die bei Anordnungen der Wuchtanordnung 1 weiter entfernt von der Rotorscheibe 27 auftreten könnten (aufgrund des dann längeren Hebels). Diese in unmittelbarer Nähe zur Rotorscheibe 27 angeordnete Wuchtanordnung 1 kann zusätzlich aufgrund des kürzeren Hebels (in Bezug auf die Schwerpunktebene im Bereich der Längsachse des Rotorgrundkörpers 31) ein optimiertes Wuchtergebnis gegenüber Wuchtanordnungen mit einem längeren Hebel hinsichtlich möglicher Rotorschwingungen liefern.

Grundsätzlich können Rotorstufen, oder andere rotierende Bauteile, statisch oder dynamisch gewuchtet werden. Bei einem dynamischen Wuchten sind zwei Ebenen bzw. Wuchtanordnungen notwendig, um einen Unwuchtausgleich durchführen zu können.

### Bezugszeichenliste

- a: axial; Axialrichtung
- r: radial; Radialrichtung
- u: Umfangsrichtung
- 1000: Rotor
- 100: erste Rotorstufe
- 200, 200': zweite Rotorstufe
- 300: dritte Rotorstufe
- 1, 1': Wuchtanordnung
- 3, 3': Rotorarm
- 5: erste Ölkavität
- 7, 7': Rotorgrundkörper
- 9: Laufschaufel
- 11: Hauptdurchströmungsrichtung
- 13: Welle
- 15: Rotationsachse
- 17, 17': vordere Rotortrommel
- 18, 18': hintere Rotortrommel
- 19, 19': Abschleuderbohrung
- 21': zweite Ölkavität
- 23: Längsachse der Schaufel
- 25: Hauptströmungskanal; Hauptdurchströmungskanal
- 27, 27': Rotorscheibe
- 29: formschlüssige Verbindung des stromaufseitigen Endbereichs des Rotorarms
- 31: Längsachse in Radialrichtung des Rotorgrundkörpers

## Patentansprüche

1. Rotorstufe (200) für eine Strömungsmaschine, umfassend
mehrere Laufschaufeln (9),
einen Rotorgrundkörper (7) mit wenigstens zwei Rotorarmen (3) und eine Wuchtanordnung (1) zum Wuchten der Rotorstufe (200),
wobei der stromab des Rotorgrundkörpers (7) angeordnete Rotorarm (3) die Wuchtanordnung (1) aufweist und
die Wuchtanordnung (1) zwischen dem axialen Endbereich des Rotorarms (3) und der Rotorscheibe (27) des Rotorgrundkörpers (7) angeordnet ist,
**dadurch gekennzeichnet,**
**dass** eine Abschleuderöffnung (19) zum Abschleudern eines Lageröls an einem stromauf des Rotorgrundkörpers (7) angeordneten Rotorarm (3) angeordnet ist,
**dass** die Abschleuderöffnung (19) nach radial außen und nahe des größten Radius einer Innenkontur einer vorderen Rotortrommel (17) angeordnet ist, und
**dass** die Wuchtanordnung (1) in einem axialen Bereich zwischen einer radialen Längsachse (31) des Rotorgrundkörpers (7) und der Hälfte der axialen Länge des stromabseitigen Rotorarms (3) angeordnet ist.

2. Rotorstufe (200) nach einem der vorangegangenen Ansprüche, wobei die Wuchtanordnung (1) in der hinteren Rotortrommel (18) angeordnet ist.

3. Rotorstufe (200) nach einem der vorangegangenen Ansprüche, wobei die Wuchtanordnung (1) integral mit dem Rotorarm (3) verbunden ist.

4. Rotorstufe (200) nach einem der vorangegangenen Ansprüche, wobei die Wuchtanordnung (1) ein Wuchtring ist oder einen Wuchtring aufweist.

5. Rotorstufe (200) nach einem der vorangegangenen Ansprüche, wobei der Rotorarm (3) aus einem ersten Material hergestellt ist oder ein erstes Material aufweist, und wobei der Wuchtring aus einem zweiten Material hergestellt ist oder ein zweites Material aufweist, wobei das erste Material und das zweite Material unterschiedlich sind.

6. Rotorstufe (200) nach einem der vorangegangenen Ansprüche, wobei der Rotorgrundkörper (7) integral mit den Laufschaufeln (9) verbunden ist.

7. Rotortrommel (17, 18) für eine Strömungsmaschine, umfassend wenigstens eine Rotorstufe (200) nach einem der Ansprüche 1 bis 6 und eine weitere Rotorstufe (100) umfassend wenigstens ein Laufrad mit einem Rotorgrundkörper (7) und mehreren Laufschaufeln (9), wobei die vordere Rotortrommel (17) die wenigstens eine Abschleuderöffnung (19) aufweist, die nach radial außen und nahe des größten Radius der Innenkontur der vorderen Rotortrommel (17) angeordnet ist.

8. Rotortrommel (17, 18) nach dem vorangegangenen Anspruch, wobei die Rotorstufen (100, 200, 300) Rotorverdichterstufen sind.

9. Rotortrommel (17, 18) nach einem der beiden vorangegangenen Ansprüche, wobei die Rotorarme (3) der ersten Rotorstufe (100) und der zweiten Rotorstufe (200) formschlüssig miteinander verbunden sind.

10. Rotor (1000) für eine Strömungsmaschine, umfassend wenigstens eine Rotorstufe (200) nach einem der Ansprüche 1 bis 6.

11. Rotor (1000) nach dem vorangegangenen Anspruch, umfassend eine Rotortrommel (17, 18) nach einem der Ansprüche 7 bis 9.

12. Rotor (1000) nach dem vorangegangenen Anspruch, wobei stromauf einer weiteren, ersten Rotorstufe (100) eine Rotornabe angeordnet ist, und wobei die wenigstens eine Rotorstufe (200) stromab der ersten Rotorstufe (100) angeordnet ist.

13. Rotor (1000) nach einem der beiden vorangegangenen Ansprüche, wobei die erste Rotorstufe (100) keine Wuchtanordnung (1) aufweist.

## Claims

1. Rotor stage (200) for a turbomachine, comprising a plurality of rotor blades (9), a rotor main body (7) having at least two rotor arms (3), and a balancing arrangement (1) for balancing the rotor stage (200), the rotor arm (3) arranged downstream of the rotor main body (7) having the balancing arrangement (1) and the balancing arrangement (1) being arranged between the axial end region of the rotor arm (3) and the rotor disk (27) of the rotor main body (7), **characterized in that** a centrifugal opening (19) for centrifuging bearing oil is arranged on a rotor arm (3) arranged upstream of the rotor main body (7), **in that** the centrifugal opening (19) is arranged radially outward and close to the greatest radius of an inner contour of a front rotor drum (17), and **in that** the balancing arrangement (1) is arranged in an axial region between a radial longitudinal axis (31) of the rotor main body (7) and half the axial length of the downstream rotor arm (3).

2. Rotor stage (200) according to any of the preceding claims, wherein the balancing arrangement (1) is arranged in the rear rotor drum (18).

3. Rotor stage (200) according to any of the preceding claims, wherein the balancing arrangement (1) is integrally connected to the rotor arm (3).

4. Rotor stage (200) according to any of the preceding claims, wherein the balancing arrangement (1) is a balancing ring or has a balancing ring.

5. Rotor stage (200) according to any of the preceding claims, wherein the rotor arm (3) is made from a first material or has a first material, and wherein the balancing ring is made from a second material or has a second material, wherein the first material and the second material are different.

6. Rotor stage (200) according to any of the preceding claims, wherein the rotor main body (7) is integrally connected to the rotor blades (9).

7. Rotor drum (17, 18) for a turbomachine, comprising at least one rotor stage (200) according to any of claims 1 to 6 and a further rotor stage (100) comprising at least one impeller having a rotor main body (7) and a plurality of rotor blades (9), wherein the front rotor drum (17) has the at least one centrifugal opening (19) which is arranged radially outward and close to the greatest radius of the inner contour of the front rotor drum (17).

8. Rotor drum (17, 18) according to the preceding claim, wherein the rotor stages (100, 200, 300) are rotor compressor stages.

9. Rotor drum (17, 18) according to one of the two preceding claims, wherein the rotor arms (3) of the first rotor stage (100) and the second rotor stage (200) are form-fittingly interconnected.

10. Rotor (1000) for a turbomachine, comprising at least one rotor stage (200) according to any of claims 1 to 6.

11. Rotor (1000) according to the preceding claim, comprising a rotor drum (17, 18) according to any of claims 7 to 9.

12. Rotor (1000) according to the preceding claim, wherein a rotor hub is arranged upstream of a further, first rotor stage (100), and wherein the at least one rotor stage (200) is arranged downstream of the first rotor stage (100).

13. Rotor (1000) according to one of the two preceding claims, wherein the first rotor stage (100) has no balancing arrangement (1).

## Revendications

1. Étage de rotor (200) pour une turbomachine, comprenant plusieurs aubes mobiles (9), un corps de base de rotor (7) avec au moins deux bras de rotor (3) et un dispositif d'équilibrage (1) pour l'équilibrage de l'étage de rotor (200), selon lequel le bras de rotor (3) disposé en aval du corps de base de rotor (7) comporte le dispositif d'équilibrage (1) et le dispositif d'équilibrage (1) est disposé entre la zone d'extrémité axiale du bras de rotor (3) et le disque de rotor (27) du corps de base de rotor (7), **caractérisé en ce qu'**une ouverture centrifuge (19) pour la centrifugation d'une huile de palier est disposée au niveau d'un bras de rotor (3) disposé en amont du corps de base de rotor (7), **en ce que** l'ouverture centrifuge (19) est disposée radialement vers l'extérieur et à proximité du plus grand rayon d'un contour intérieur d'un tambour du rotor avant (17), et **en ce que** le dispositif d'équilibrage (1) est disposé dans une zone axiale entre un axe longitudinal radial (31) du corps de base de rotor (7) et la moitié de la longueur axiale du bras de rotor (3) se trouvant en aval.

2. Étage de rotor (200) selon l'une des revendications précédentes, selon lequel le dispositif d'équilibrage (1) est disposé dans le tambour du rotor arrière (18).

3. Étage de rotor (200) selon l'une des revendications précédentes, selon lequel le dispositif d'équilibrage (1) est intégralement relié au bras de rotor (3).

4. Étage de rotor (200) selon l'une des revendications précédentes, selon lequel le dispositif d'équilibrage (1) est un anneau d'équilibrage ou comporte un anneau d'équilibrage.

5. Étage de rotor (200) selon l'une des revendications précédentes, selon lequel le bras de rotor (3) est constitué d'un premier matériau ou comprend un premier matériau, et selon lequel l'anneau d'équilibrage est constitué d'un second matériau ou comprend un second matériau, selon lequel le premier matériau et le second matériau sont différents.

6. Étage de rotor (200) selon l'une des revendications précédentes, selon lequel le corps de base de rotor (7) est intégralement relié aux aubes mobiles (9).

7. Tambour du rotor (17, 18) pour une turbomachine, comprenant au moins un étage de rotor (200) selon l'une des revendications 1 à 6 et un autre étage de rotor (100) comprenant au moins une roue avec un corps de base de rotor (7) et plusieurs aubes mobiles (9), selon lequel le tambour du rotor avant (17) présente au moins une ouverture centrifuge (19) qui est disposée radialement vers l'extérieur et à proximité du plus grand rayon du contour intérieur du tambour du rotor avant (17).

8. Tambour du rotor (17, 18) selon la revendication précédente, selon lequel les étages de rotor (100, 200, 300) sont des étages de compresseur de rotor.

9. Tambour du rotor (17, 18) selon l'une des deux revendications précédentes, selon lequel les bras de rotor (3) du premier étage de rotor (100) et du second étage de rotor (200) sont reliés l'un à l'autre par liaison de forme.

10. Rotor (1000) pour une turbomachine, comprenant au moins un étage de rotor (200) selon l'une des revendications 1 à 6.

11. Rotor (1000) selon la revendication précédente, comprenant un tambour du rotor (17, 18) selon l'une des revendications 7 à 9.

12. Rotor (1000) selon la revendication précédente, selon lequel un moyeu de rotor est disposé en amont d'un autre premier étage de rotor (100), et selon lequel l'au moins un étage de rotor (200) est disposé en aval du premier étage de rotor (100).

13. Rotor (1000) selon l'une des deux revendications précédentes, selon lequel le premier étage de rotor (100) ne comporte pas de dispositif d'équilibrage (1).
